# EUROPEAN PATENT SPECIFICATION

(11) **EP 4 238 414 B1**
(45) Date of publication and mention of the grant of the patent: **08.10.2025**
(21) Application number: 23158936.7
(22) Date of filing: 28.02.2023
(51) Int. Cl.: A01K 91/10, A01K 97/11

(54) **DEVICE USED WITH A FISHING ROD FOR AUTOMATIC HOOKING OF A STRIKING FISH**
MIT EINER ANGELRUTE VERWENDETES VORRICHTUNG ZUM AUTOMATISCHEN EINHAKEN EINES FISCHES
DISPOSITIF UTILISÉ AVEC UNE CANNE À PÊCHE POUR L'ACCROCHAGE AUTOMATIQUE D'UN POISSON

(30) Priority: 01.03.2022 IT 202200003833
(43) Date of publication of application: 06.09.2023
(73) Proprietor: Calicchia, Massimo, 06044 Castel Ritaldi (PG) (IT)
(72) Inventor: Calicchia, Massimo, 06044 Castel Ritaldi (PG) (IT)
(74) Representative: Baldi, Claudio

(56) References cited:
- CN-Y- 2 498 839
- JP-U- H0 681 270
- JP-U- S48 102 180
- US-A- 2 850 831

## Description

The present invention relates to a device suitable for being attached to a fishing line of a fishing rod to obtain an automatic strike of a fish.

It must be noted that, in sport fishing jargon, the expression "strike" refers to the secure hooking of a fish that has taken the bait.

Currently, the strike of the fish is always obtained by means of an energetic tug given by the angler to the fishing line - obviously acting on the fishing rod - with the consequence of driving the hook deep into the fish's mouth. However, such a manual operation does not always lead to the desired result and it sometimes happens that the fish, which had taken the bait, manages to get free. The causes of such a failure are mainly two: in one case it may happen that the tug necessary for striking the fish was not given on the fishing rod with the necessary skill; alternatively, it may happen that the fish takes the bait on the hook of a fishing rod that has been placed on a support by the angler, in a condition in which there may be a critical delay between the moment when, from the movements of the fishing rod, the angler understands that the fish has actually taken the bait and the moment when the angler actually grabs the fishing rod and impresses the necessary tug on the fishing rod itself.

US2850831A describes a fish hooker comprising a tubular frame attached to the fishing rod by means of fastening means. A stud is slidingly threaded in the tubular frame and is subject to the action of a tensioned spring attached to the tubular frame. The stud includes a side pin that is slidingly threaded on an L-shaped slot having a first section that extends longitudinally along the tubular frame and a second transverse section. The side pin has an enlarged head that protrudes externally from the tubular frame. The device also includes two open eyelets that protrude externally from the tubular frame.

In use, after casting, the fishing line is threaded through the two eyelets and is passed around the enlarged head of the side pin of the stud. Then, the device is triggered by sliding the side pin of the stud along the longitudinal section of the slot in such a way to extend the spring and make the pin slide along the transverse section so as to lock the spring in extended condition. When the fish takes the hook carried by the fishing line, the side pin slides downward, positioning itself on the longitudinal section and unlocking the spring, which goes off and pulls the stud as well as the fishing line, giving a tug to the fish that has taken the hook.

In US2850831A, the spring must necessarily be loaded after casting and cannot be loaded before casting. In fact, in the event that an attempt is made to load and lock the spring first and then cast the fishing line, the side pin may be accidentally disengaged from the transverse section when casting the line, thus releasing the spring.

The device described in US2850831A is impaired by some limitations due to the large distance (usually 4 to 10 meters) between the device and the hook submerged in the water, which depends on the cast made by the angler. Moreover, the limitations are worsened if the line is not properly tensioned.

In fact, because of the large distance between the device and the hook, the tugging force transmitted to the hook is considerably attenuated compared to the force that is actually imparted by the spring on the side pin on which the line is wound. Otherwise said, the tugging force imparted by the spring tends to be progressively attenuated to the point that it is so slight on the hook and is not sufficient to effectively hook the fish.

Moreover, the high distance between the tugging point and the hook negatively affects the capability of the device to be immediately triggered when the fish takes the hook.

CN 2 498 839 Y discloses a for automatic hooking of a fish, which device comprises a tubular casing, an elastic telescopic body in the form of a rubber ring, a knot provided on a leader and connected to the elastic element, a triggering turning rod suitable for stopping said leader in a front end-of-travel position when the elastic element is in extended position, and a thread passing through a front notch and connected to a hook and to said anchor, so that, when a fish pulls the hook, the knot causes the triggering turning rods to rotate and to release the fishing leader, wherein said device further comprises a water-soluble bolt that are inserted into the casing.

Based on these premises, the device according to the invention has been conceived in order to optimize the strike of the fish thanks to the effective execution and the high reliability of the device, which ensures the best result in any condition of use of the fishing rod.

More specifically, the purpose of the present invention is to devise an automatic strike device of submerged type suitable for being attached to the fishing line of the fishing rod that is reliable and efficient and can be securely triggered before the fishing line is cast.

Specifically, such a device, which is suitable for being preferably disposed in a horizontal position during use, is mounted at the end of the fishing line that is directly driven by the reel of the fishing rod and is internally equipped with a spring to which an additional section of fishing line is attached, protruding inferiorly to support the hook.

The idea behind such an invention is to obtain the automatic strike of the fish, in such a way that the necessary, energetic and instantaneous pull imposed on the hook is no longer the consequence of a tug impressed by the angler on the fishing rod, but rather the result of the automatic triggering of said spring provided in the device according to the invention, which is generated as soon as a fish has taken the bait, as explained below.

The new device according to the invention is intended to be primarily used for bottom fishing, disposing such a device in a horizontal position in its operating condition. However, this does not prevent the new device from being also used for float fishing, in which case its operating condition is vertical. The device according to the invention can be also used for the application of sinkers and/or floats of various sizes, both of fixed and disposable type.

The invention is defined in claim 1. Preferred embodiments are defined in the dependent claims.

For the sake of clarity, the description of the invention continues with reference to the attached drawings, which have only an illustrative and not limiting value, wherein:
- Fig. 1 is a first axonometric view of the new device in question, shown in non-operating position;
- Fig. 2 is the same as Fig. 1, except for the fact that the device in question is shown in operating position;
- Fig. 3 shows the device of Fig. 1 in the moment when it is operated;
- Fig. 4 is an exploded view of the device of Fig.1;
- Fig. 4A shows a detail of the device according to the invention relative to a particular version of a rear anchor;
- Fig. 5 is a longitudinal section with a vertical plane of the device in question;
- Figs. 5A and 5B are the same as Fig. 5, except for the fact that the water-soluble locking means are inserted in the casing of the device;
- Figs. 6 and 7 are perspective views of a second embodiment of the device in question provided with a front anchor shown in non-operating position and in operating position, respectively;
- Fig. 7A is an enlarged detail of Fig. 7;
- Fig. 8 is a schematic view illustrating a fishing rod provided with the device according to the invention.

With reference to the appended figures, a device according to the invention, which is indicated with reference numeral 1, is described.

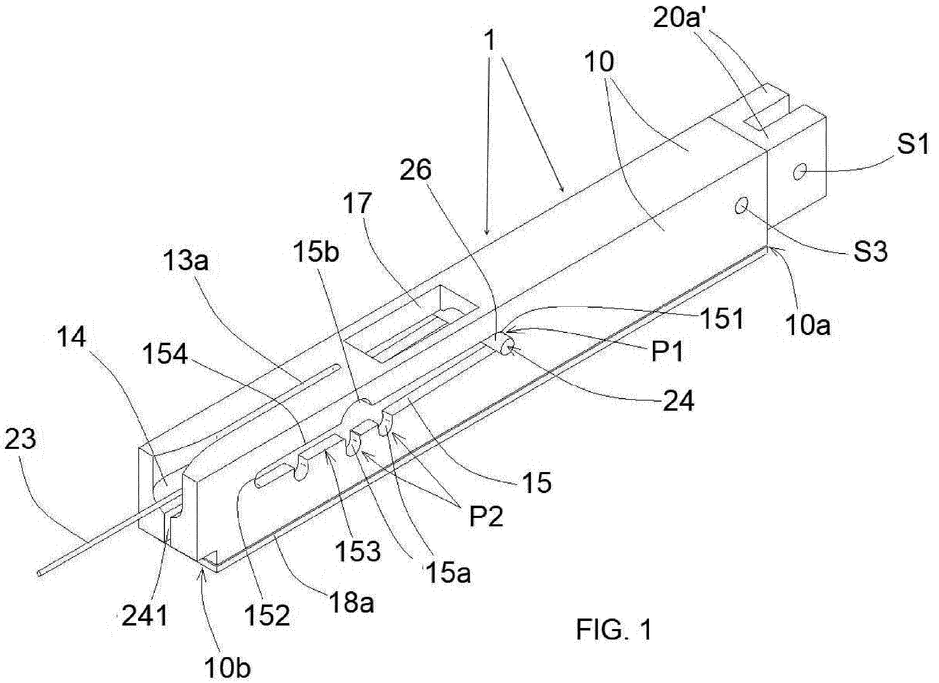

With reference to Fig. 1, the device (1) comprises a casing (10) with a substantially elongated tubular shape that extends from a rear end (10a) to a front end (10b).

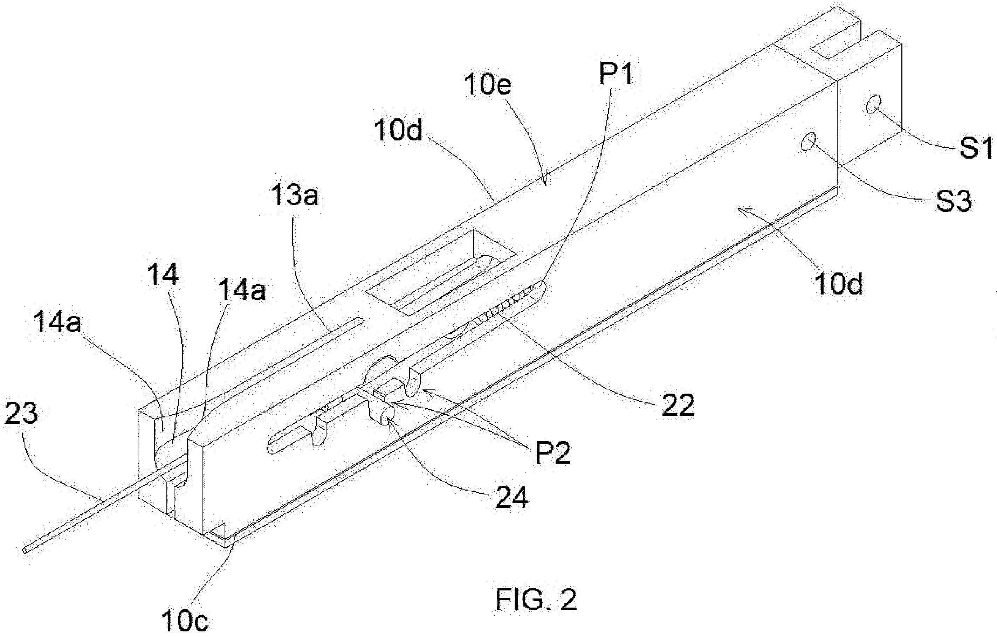

With reference to Fig. 2, such a casing (10) comprises a bottom wall (10c), two side walls (10d) and an upper wall (10e).

The casing (10) has a rectangular section and a monolithic structure; however, nothing prevents it from having a different section (possibly a circular one) and from being made in a version consisting of two half-bodies that are permanently coupled.

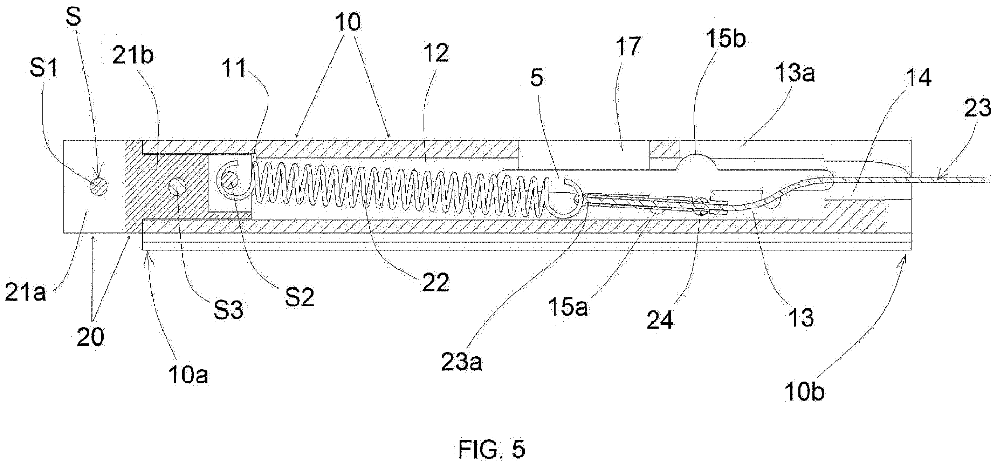

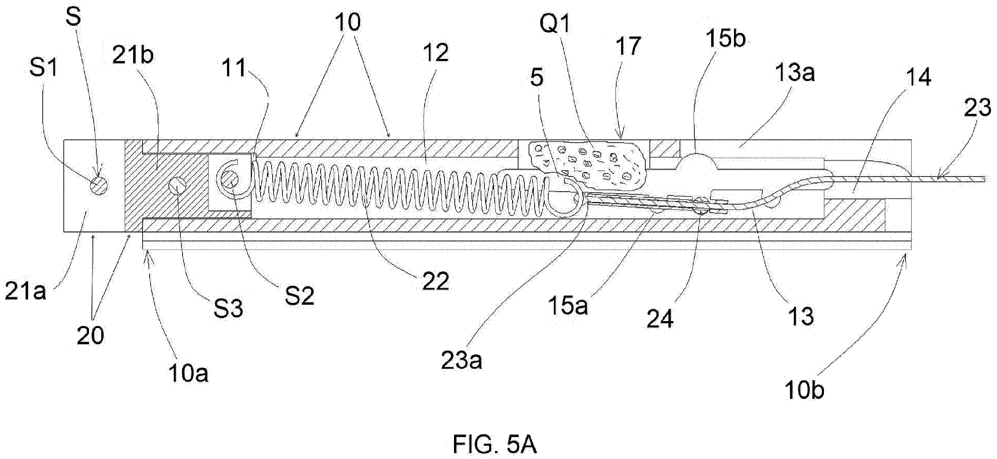

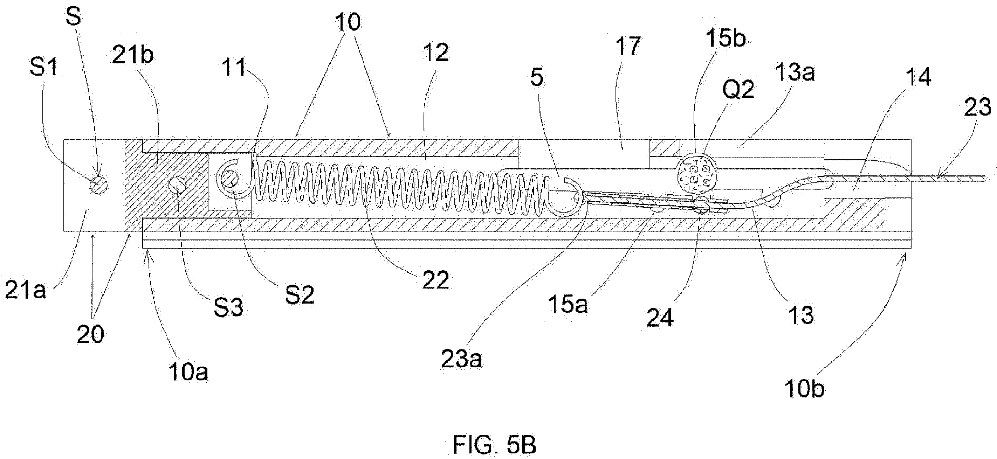

With reference to Fig. 5, the casing (10) is internally crossed by an axial duct with irregular shape in order to facilitate the accommodation and the operation of the components of the device (1). Such a duct comprises the following sections, which are suitably connected to each other:
- a first section (11) consisting in a cavity with substantially rectangular section, which is realized starting from the rear end (10a) of the casing (10);
- a second section (12) consisting in a cylindrical hole,
- a third section (13) consisting in a duct, which is substantially shaped like a gutter, and is slightly inclined from the back to the front, in the direction of the bottom wall (10c) of the casing; the duct (13) is aligned with a longitudinal cut (13a) provided on the upper wall (10e) of the casing (10),
- a fourth section (14) consisting in a U-shaped notch obtained at the front end (10b) of the casing (10); wherein the side walls (14a) of said notch (14) diverge towards the front end (10b) of the casing and are connected with the edges of the longitudinal cut (13a), as shown in Fig. 2.

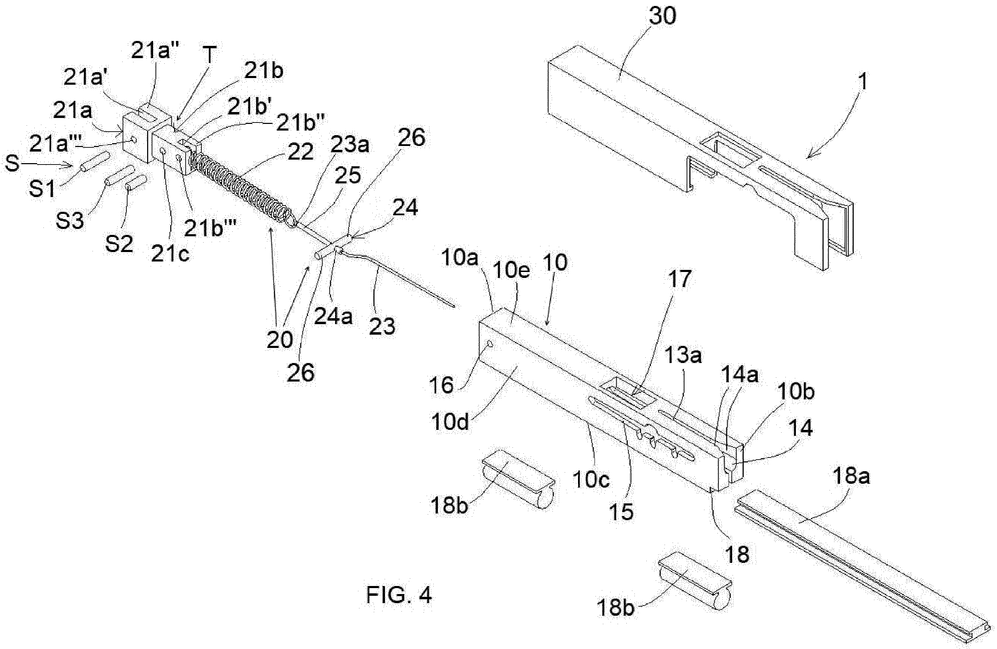

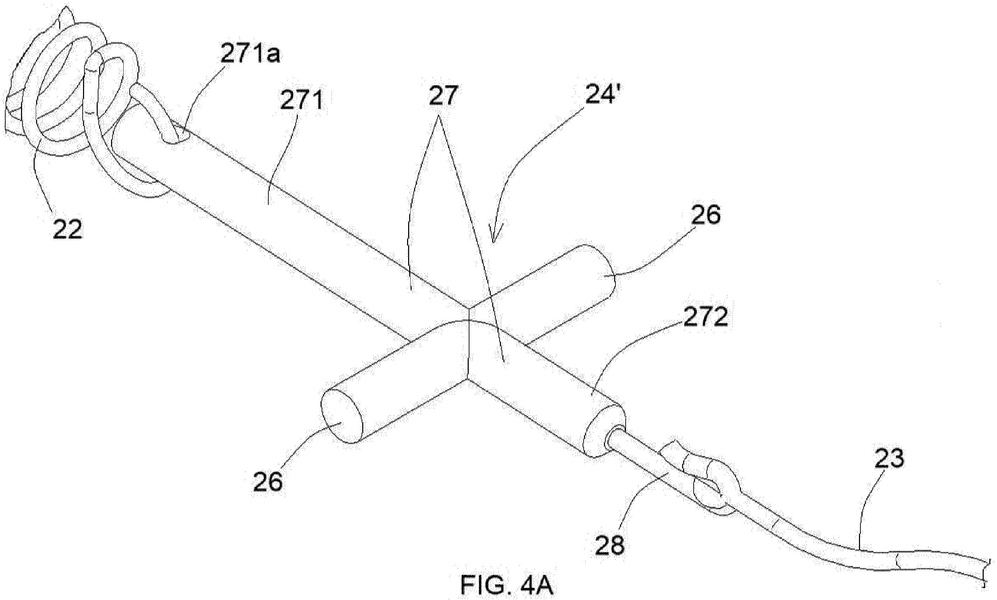

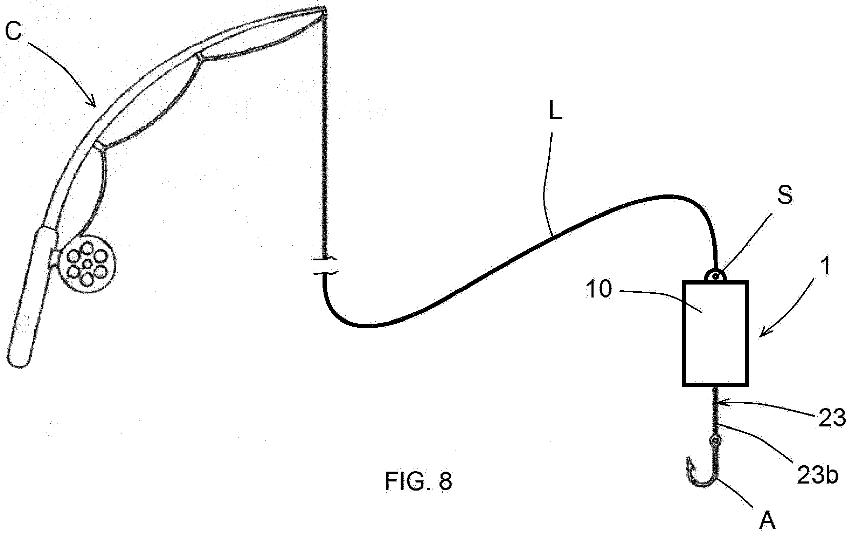

With reference to Figs. 4 and 8, the device (1) further comprises fastening means (S) disposed at the rear end (10a) of the casing (10) for attaching the casing (10) to one end of a fishing line (L) of a fishing rod in such a way that the device (1) is submerged during use.

In particular, the device (1) comprises two wings (21a") integral to the casing (10) and arranged on the rear end (10a) of the casing. The wings (21a") comprise holes (21a') aligned with each other. The fastening means (S) comprise a transverse cylindrical pin (S1) arranged transversely and threaded into said holes (21a') of the wings (21a") and suitable for being an attachment point for the end of the fishing line (L) of a fishing rod.

Once the fishing line (L) has been cast, the device (1) is suitable for being submerged in the water.

With reference to Figs. 4 and 5, the device (1) comprises an actuator (20) comprising an elastic element (22) arranged in said casing (10).

In particular, said actuator (20) comprises a cap (T) formed by a head (21a) supporting a stem (21b). The stem (21b) is suitable for being inserted in the cavity (11) provided in the rear end (10a) of the casing (10), when the head (21a) is brought in contact with the rear end (10a) of the casing (10). The stem (21b) comprises second fastening means (S2) for its attachment to the rear end of the elastic element (22).

The head (21a) has a notch (21a') arranged vertically and centrally, which gives rise to the formation of the two wings (21a"). Each wing (21a") is provided with a through hole (21a‴) of circular shape wherein the transverse cylindrical pin (S1) of the fastening means (S) is inserted.

The tip of the stem (21b) has a notch (21b') arranged vertically and centrally that gives rise to the formation of two second wings (21b"). Each second wing (21b") has a through hole (21b‴) of circular shape, with axis perpendicular to the longitudinal axis of the notch (21b').

The second fastening means (S2) comprise a second transverse cylindrical pin passing through the symmetrical holes (21b‴) of the wings (21b") of the stem (21b). The second pin is suitable for being used to engage the rear end of the spring element (22). The elastic element (22) is preferably a spring having a shape and size such to be engaged in the cylindrical hole (12) of the casing (10), with the possibility of extending and retracing freely.

Connection means (16, 21c, S3) are provided between said cap (T) and said casing (10) to secure the cap (T) to the casing (10). The connection means (16, 21c, S3) provided between the casing (10) and the cap (T) of the actuator (20) comprise:
- a pair of circular holes (16) provided at the side walls (10d) of the casing (10) at the height of the cavity (11) provided on the inside of the rear end (10a),
- a circular hole (21c) passing through the stem (21b) of the cap (T), perpendicular to the longitudinal axis of the stem and capable of being aligned with the holes (16) of the casing when the stem (21b) is engaged in the cavity (11) of the casing (10); and
- a third cylindrical pin (S3) suitable for penetrating the holes (16) of the casing (10) and the hole (21c) of the stem (21b) of the cap (T).

With reference to Figs. 4, 5 and 8, the device (1) comprises a thread (23) having a first end (23a) attached to the elastic element (22) and a second end (23b) supporting a fish hook. The thread (23) is suitable for passing through said notch (14) provided on the front end (10b) of the casing (10).

The elastic element (22) to which the thread (23) is attached is suitable for being alternately disposed in an extended position, which is achieved as a result of a pull exerted on the thread (23), and in a retracted position, which is achieved thanks to its own spontaneous retraction force, as soon as the pull on the thread (23) has ceased.

The device (1) comprises one or more anchors (24; 24', 240) connected to the elastic element (22)
Said one or more anchors (24, 24', 240) are attached integrally to the thread (23).

End-of-travel means (P1) are arranged in said casing (10) and cooperate with the anchor to maintain the anchor in a rear end-of-travel position assumed as long as the elastic element (22) is in retracted position.

Stopping means (P2) are arranged in said casing (10) and cooperate with the anchor to maintain the anchor in a front end-of-travel position, wherein the elastic element (22) is in an extended position.

With reference to Figs. 1 and 4, the casing (10) provides that each one of the side walls (10d) is provided with a longitudinal slot (15) having a length such to be disposed astride said cylindrical hole (12) and said duct (13) of the casing (10). The longitudinal slot (15) has a rear edge (151), a front edge (152), an upper edge (154) and a lower edge (153). The two longitudinal slots (15) obtained on the two side walls (10d) are symmetrical. One or more opposite pairs of grooves (15a) are provided on the lower edge (153) of the longitudinal slots (15), whereas a notch (15b) with basically inverted U-shape is provided on the upper edge (154).

A rear anchor (24; 24') slides on the two longitudinal slots (15). In particular, the rear anchor (24; 24') comprises two cylindrical arms (26), each one of them having one end inserted into the respective longitudinal slot (15).

The cylindrical arms (26) of the rear anchor (24; 24') have a circular section with a radius equal to that of the semicircular grooves (15a) of the longitudinal slots (15). The stopping means (P2) for said rear anchor (24; 24') comprise the grooves (15a) provided at the lower edges of the longitudinal slots (15). The grooves (15a) are suitable for receiving the ends of the arms (26) of the rear anchor (24; 24'). In contrast, the end-of-travel means (P1) consist in the rear end edges (151) of the longitudinal slots (15).

With reference to Fig. 4, according to a first embodiment, the rear anchor (24) has the shape of a cylindrical pin suitable for being transversely fixed along said thread (23). The rear anchor (24) has a hole in its centerline wherein the thread (23) is inserted and fixed. With respect to said hole, said cylindrical arms (26) are identified on the rear anchor (24). Still with reference to Fig. 4, in order to ensure a stable and correct positioning of the rear anchor (24) along the thread (23), a rigid spacer (25) is preferably provided around the thread (23) between the elastic element (22) and the rear anchor (24).

The rear anchor (24) is made of a metallic material (possibly lead) and is provided with a cylindrical mouthpiece (24a) on the outside of said hole, facing the direction opposite to that occupied by the elastic element (22). The mouthpiece (24a) is capable of undergoing a plastic deformation that enables it to be immovably tightened on the thread (23), so as to prevent a free sliding of the rear anchor (24) along the thread (23).

With reference to Fig. 4A, an alternative version of said rear anchor (24') is shown. In such a case, the rear anchor (24') has the shape of a cross comprising a longitudinal body (27) and the two cylindrical arms (26) protruding in opposite directions from the longitudinal body (27) and with respect to which a rear section (271), where the elastic element (22) is attached, and a front section (272), which comprises a hook (28) for attaching the thread (23), can be identified in the longitudinal body (27). On the rear section (271) there is a hole (271a) wherein an attachment portion of the elastic element (22) is inserted. Also in such a case, the rear anchor (24') is made of a metal material, preferably lead. Such an alternative version of the rear anchor (24') significantly facilitates the changing of the thread (23). In fact, in such a case it is only necessary to knot the end of the thread (23) to the hook (28).

With reference to Fig. 1, the upper wall (10e) of the casing (10) has a window (17) arranged behind the longitudinal cut (13a).

With reference to Fig. 4, on the other hand, said bottom wall (10c) of the casing (10) is provided with notched means (18) suitable for attaching sinkers (18a) or floats (18b). Specifically, the notched means (18) consist of a longitudinal guide obtained along the entire length of the bottom wall (10c) of the casing (10).

Following is a description of the way in which the device (1) according to the invention is assembled and mounted on a fishing line.

The actuator (20) of the device is suitable for operating inside the casing (10), following its insertion through the rear end (10a) of the casing. The proper installation of such an actuator (20) requires that the stem (21b) of the cap (T) is entirely engaged in said cavity (11) of the casing (10), in such a way that said through hole (21c) of the stem (21b) is aligned with the two the holes (16) provided on the side walls (10d) of the casing (10).

Therefore, the stable coupling between the actuator (20) and the casing (10) can be achieved by means of the third transverse pin (S3), which is suitable for simultaneously penetrating the two holes (16) of the side walls (10d) of the casing (10) and the hole (21c) of the stem (21b) of the cap (T) of the actuator (20).

In such a condition, the elastic element (22) attached to the stem (21b) can be disposed in the cylindrical hole (12) of the casing (10), with the possibility of being extended and retracted. The thread (23) attached to the elastic element is successively inserted into the duct (13) and into the notch (14), until it comes out at the front end (10b) of the casing (10).

The rear anchor (24, 24') is disposed in such a position that the arms (26) are perfectly perpendicular to the longitudinal axis of the casing (10), so that the arms (26) can be slidingly inserted in the two slots (15) of the side walls (10d) of the casing (10), and can come out of the slots, as shown in Figs. 1, 2 and 3.

With reference to Fig. 8, once it has come out from the front end (10b) of the casing (10), the free end (23b) of the thread (23) must hook a fish hook (A) suitable for supporting a bait. Finally, the casing (10) can be connected to the fishing line (L) by means of the fastening means (S), which specifically consist of the transverse cylindrical pin (S1) inserted into said holes (21a') of the wings (21a").

The device (1) is suitable for being alternately disposed in an "untriggered" or inactive position (shown in Fig. 1), wherein it is unable to operate, and a "triggered" or active position, (shown in Fig. 2), wherein it is able to perform the automatic strike of the fish.

In the inactive position, the rear anchor (24; 24') of the device (1) is subject to the pull exerted by the elastic element (22) in the direction of the rear end (10a) of the casing (10). Hence, the rear anchor (24; 24') is arranged in a rear end-of-travel position, in which the arms (26) of said rear anchor (24; 24') are brought in contact with the rear edges (151) of said slots (15), as shown in Fig. 1.

When the device (1) is to be triggered, the user exerts a forward pull on the rear anchor (24; 24'), such that the rear anchor (24; 24') advances along the slots (15), with the additional effect of causing the extension of the elastic element (22) to which the rear anchor (24; 24') is connected. Such an advancement of the rear anchor (24; 24') can be caused by the user by pulling the thread (23) and/or by using his/her fingers to grab the ends of the arms (26) of the rear anchor (24, 24') that protrude from the side walls (10d) of the casing (10). In each case, such advancement has the specific purpose of engaging the ends of the arms (26) of the rear anchor (24; 24') inside either one of the pairs of grooves (15a) of the slots (15), as shown in Fig. 2.

Such a coupling between the ends of the arms (26) of the rear anchor (24; 24') and the grooves (15a) of the slots (15) serves to stabilize the forward position reached by said rear anchor (24; 24'), as well as the extended position assumed by the elastic element (22), but also to prevent the rear anchor (24; 24') from instantaneously returning to its rear end-of-travel position due to the spontaneous retraction of the elastic element (22).

The decision to use either one of said opposite pairs of grooves (15a) of the stopping means in order to stop the rear anchor (24; 24') in such an operating position is justified by the desire to impose a greater or lesser extension on the elastic element (22), which corresponds to a different retraction force, according to the types of fishing.

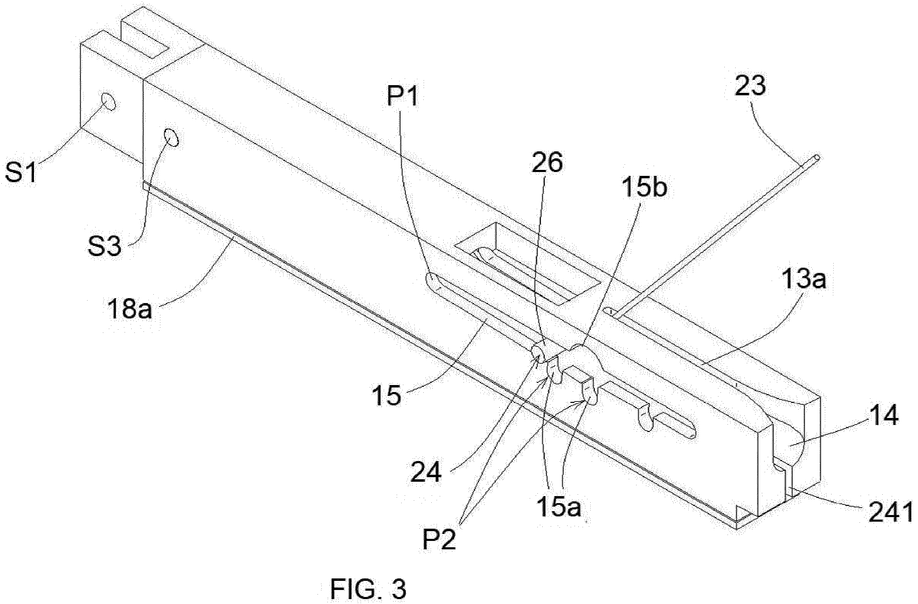

After illustrating the operation that is necessary to trigger the device (1), it is easier to understand the automatic operation of the device as a result of a stress transmitted by a fish that has begun to eat the bait mounted on the hook placed on the end (23b) of the thread (23). As shown in Fig. 3, the pull exerted by the fish on the thread (23) generates the extraction of the rear anchor (24; 24') from the pair of grooves (15a) wherein it had previously been engaged, with the additional effect of eliminating the constraint that obliged the elastic element (22) to be maintained in the extended position. In view of the above, the elastic element (22) instantaneously returns to its retracted position, dragging along the rear anchor (24; 24') that returns to the rear end-of-travel point, on the rear edge (151) of the two slots (15), and most of all imposing a real backward jerk on the thread (23) and on the hook, thus effectively striking the fish.

However, the pull exerted on the thread (23) by the fish may not be in a perfectly axial direction, especially when the device (1) rests on the bottom of the fishing field. The fish may exert a traction on the thread (23) according to a bottom-up trajectory, i.e. from the bottom of the fishing field toward the surface. It is precisely for this second hypothesis that the longitudinal cut (13a) interfaced with the duct (13) wherein the thread (23) is inserted in the device (1) has been provided. In fact, due to such a provision, when it is pulled from the bottom up in an inclined direction, the thread (23) is lifted out of the duct (13) and exits the casing (10) through the longitudinal cut (13a), as shown in Fig. 3.

Additionally, the device (1) provides for another important technical-functional feature to ensure that, when the fishing rod is cast, the rear anchor (24; 24') cannot be accidentally disengaged from the pair of grooves (15a) in which it was engaged while triggering the device (1). It is evident, in fact, that if this were to happen, the elastic element (22) would be immediately released, even before the device (1) touches the water, thus completely frustrating the operation of the device.

In order to prevent such a risk, the device comprises water-soluble locking means (Q1, Q2) that act on the thread and/or the rear anchor (24; 24') to prevent the rear anchor (24) from being disengaged from the stopping means (P2) as long as the device is out of the water.

So, after triggering the device (1), the user can lock the position of the rear anchor (24; 24') inside the chosen pair of grooves (15a) thanks to the provision of said water-soluble locking means (Q1, Q2) which consist of one or more inserts suitable for exerting a pressure on the rear anchor (24) toward the bottom of the grooves (15a).

Said water-soluble locking means (Q1, Q2) tend to dissolve as soon as the device (1) is submerged in water. In such a way, the rear anchor (24; 24') is automatically freed from the interference of said water-soluble locking means (Q1, Q2), so that it effectively recovers the possibility of being extracted from the pair of grooves (15a) as a result of the pull exerted by the fish on the hook.

The device (1) is suitable for accommodating two different types of water-soluble locking means (Q1, Q2), as shown in Figs. 5A and 5B.

In the first case shown in Fig. 5A, said water-soluble locking means (Q1, Q2) consist of a water-soluble pad (Q1) suitable for being inserted into the device (1) until it comes in contact with the rear anchor (24; 24') through the window (17) provided at the upper wall (10e) of the casing (10). Said window (17) may be provided with a lid (not shown in the appended figures) that can be closed after the positioning of said water-soluble pad (Q1), so as to prevent the risk that the pad may be fortuitously detached from the rear anchor (24; 24').

In a second case, the water-soluble locking means (Q1, Q2) comprise a cylindrical pin made of water-soluble material, suitable for firmly pressing on the rear anchor (24; 24'), it being inserted transversely in the pair of slots (15) of the casing (10) and locked in the two notches (15b) obtained at the upper edges of the slots (15).

In addition to or in replacement of said rear anchor (24), the device (1) can use a front anchor (240), which is similar in purpose but different in construction and function.

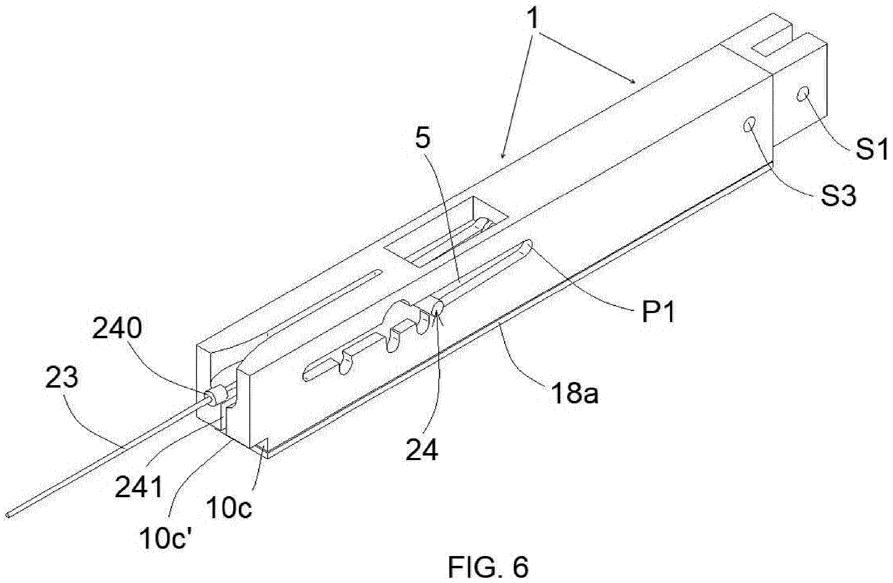

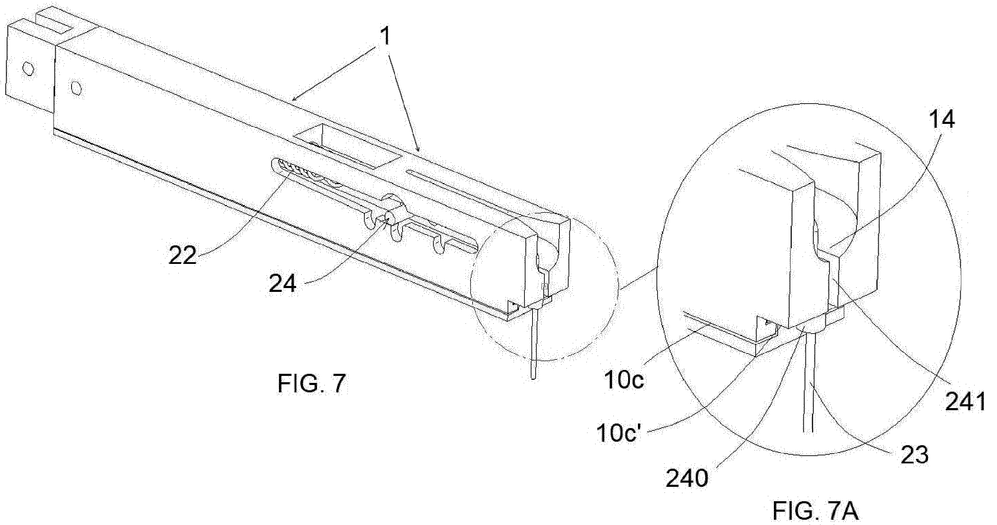

Figs. 6 and 7 show the device (1) with the front anchor (240). In such a case the front anchor (240), which is essentially cylindrical, consists of a fishing sinker inserted and attached along the thread (23) behind the hook.

The casing (10) has a groove (241) with a substantially I-shaped profile, arranged at the height of the front end (10b).

In order to trigger the device (1), the user must exert a pull on the thread (23) such that the front anchor (240) is pulled out of the front notch (14) and especially such that an extension of the elastic element (22) is generated, as shown in Figs. 7 and 7A.

In order to stabilize the thread (23) in the extracted position, the user must insert the thread (23) into the I-shaped groove (241) and bring the front anchor (240) in contact with a step (10c') of the bottom wall (10c) of the casing (10), in a condition such that said front anchor (240) is engaged against said step (10c') of said bottom wall (10c) by virtue of the retraction force exerted by the elastic element (22).

Also in this case, the pull exerted by the fish on the thread (23) produces the effect of removing the constraint to which the front anchor (240) was subjected, allowing the elastic element (22) to be instantaneously moved backwards, thus ensuring the desired tug on the thread (23) and consequently on the hook, as schematically shown in Fig. 6.

Such a backward travel of the thread (23) is stopped when the back anchor (24; 24') reaches its rear end-of-travel position, abutting against the back edge (151) of the slots (15).

The provision of the front anchor (240) is justified to increase the functionality and versatility of the device (1).

The use of the rear anchor (24; 24') is advantageous when the device (1) rests horizontally on the bottom of the fishing field. The use of the front anchor (240) is preferred when the device (1) is intended to hang from the fishing line of the fishing rod in a substantially vertical position.
The elastic element (22) may also be a spring with adjustable tension.

The third pin (S3) may simultaneously perform the dual function of connecting the actuator (20) to the casing (10) and attaching the spring between the two wings (21b") of the stem (21b) of the actuator (20). This would obviously avoid the use of the second pin (S2).

With reference to Fig. 4, the device (1) is provided with a camouflage cover (30) suitable for containing the casing (10) so that the device (1) may be not directly visible to the fish. The camouflage cover (30) may be externally decorated to imitate the sand, the seaweed or the sea rocks.

The device (1) according to the invention has three substantial differences with respect to the device of the prior art described in US2850831A.

The thread (23) ending with the hook (A) is permanently attached to the anchor (24; 24, 240) and does not have to be wound around the anchor by the user every time the fishing line is cast, as in the device described in US2850831A.

It is precisely this difference in construction from the device described in US2850831A that allows the angler to trigger the device according to the invention before casting the line.

A further difference consists in the fact that the hook (A) is not attached to the fishing line, but at the end of the short thread (23) connecting the hook (A) to the anchor (24; 24', 240); the length of said thread (23) is a few tens of centimeters, preferably equal to or less than 50 cm, so that the jerking stress transmitted by the elastic element (22) of the device (1) to the hook (A) is not attenuated.

Otherwise said, the short thread (23) ending with the hook (A) is attached to the device (1), whereas the device (1) is connected by the connection means (S) to the end of the fishing line (L) whose length, whatever it may be, cannot impair the proper functioning of the device (1).

Finally, the provision of the water-soluble locking means (Q1, Q2) prevents the risk of an accidental and undesirable release of the elastic means while casting the line, which would cause the untriggering of the device before it is submerged in the water.

## Claims

1. A device (1) suitable for being attached to a fishing line of a fishing rod to obtain an automatic strike of a fish; said device (1) comprising:
- a tubular casing (10) comprising an axial duct, a rear end (10a), a front end (10b) and a front notch (14) at the front end (10b);
- an actuator (20) comprising an elastic element (22) disposed at the rear end (10a) of said tubular casing (10); wherein said elastic element (22) is suitable for being disposed in an extended position and a retracted position;
- at least one anchor (24; 24', 240) connected to the elastic element (22),
- stopping means (P2) disposed in said casing (10) and suitable for stopping said anchor (24; 24', 240) in a front end-of-travel position when the \elastic element (22) is in extended position;
- a thread (23) passing through the front notch (14) and connected to a hook (A) and to said anchor (24, 24'; 240), so that as a result of a pull exerted on the thread (23) by the fish that has taken the hook, said anchor (24; 24', 240) is disengaged from said stopping means (P2);
wherein said thread (23) is permanently attached to the anchor (24; 24', 240); and said device (1) comprises:
- fastening means (S) arranged at the rear end (10a) of the casing for attaching the casing (10) to one end of a fishing line (L) of a fishing rod, so that the device (1) is submerged during use; and
- water-soluble locking means (Q1, Q2) that are inserted into said axial duct of the casing (10) and acting on the thread (23) and/or on the anchor (24; 24' 240) to prevent the anchor from disengaging from the stopping means (P2).

2. The device (1) according to claim 1, wherein said thread (23) has a length of 50 cm or less.

3. The device (1) according to claim 1 or 2, wherein said fastening means (S) comprise a transverse cylindrical pin (S1) transversely threaded into holes (21a') of wings (21a") integral with the casing (10) and arranged on the rear end (10a) of the casing; said pin being suitable for providing an attachment for the end of the fishing line (L).

4. The device (1) according to any one of the preceding claims, wherein:
- said device (1) comprises a rear anchor (24; 24') to which said thread (23) is attached; said rear anchor (24, 24') comprises two cylindrical arms (26) aligned with each other;
- said casing (10) comprises two longitudinal slots (15) in symmetrical opposite positions, wherein ends of the cylindrical arms (26) of the rear anchor (24) are slidingly inserted;
- said stopping means (P2) comprise one or more opposed pairs of grooves (15a) provided at the lower edges (153) of the longitudinal slots (15) suitable for receiving the ends of the cylindrical arms of the rear anchor (24, 24').

5. The device (1) according to claim 4, wherein said rear anchor (24') has the shape of a cross comprising a longitudinal body (27) and the two cylindrical arms (26) protruding in opposing directions from the longitudinal body (27); said longitudinal body (27) comprises a rear section (271) to which the elastic element (22) is attached and a front section (272) comprising a hook (28) for attaching the thread (23).

6. The device (1) according to claim 4, wherein said rear anchor (24) is in the form of a cylindrical pin comprising a central hole, wherein the thread (23) is inserted, and with respect to which said two cylindrical arms (26) are identified on said rear anchor (24).

7. The device (1) according to claim 6, comprising a tubular spacer (25) arranged around the thread (23) between said elastic element (22) and the rear anchor (24); wherein the rear anchor (24) has a plastically deformable mouthpiece (24a) arranged in the hole of the rear anchor (24) for securing the thread (23) to the rear anchor (24).

8. The device (1) according to any one of the preceding claims, wherein a window (17) is provided on an upper wall (10e) of the casing (10) for inserting the water-soluble locking means (Q1).

9. The device (1) according to any one of claims 4 to 8, wherein said casing (10) comprises inverted U-shaped slots (15b) arranged in the upper edge of the slots (15) for a transverse insertion of said water-soluble locking means (Q2) having the shape of a plug.

10. The device (1) according to any one of the preceding claims, comprising a front anchor (240) consisting in a spherical sinker inserted and fixed on said thread (23), wherein said stopping means (P2) comprise a groove (241) substantially with an I-shape, realized in the front end (10b) of the casing (10).

11. The device (1) according to any one of the preceding claims, wherein said casing (10) comprises a bottom wall (10c) having notched means (18) suitable for attaching sinkers (18a) or floats (18b).

12. The device (1) according to any one of the preceding claims, comprising of a cover (30) suitable for containing the casing (10).

13. The device (1) according to any one of the preceding claims, wherein said actuator (20) comprises a cap (T) attached to the rear end (10a) of the casing; said cap being attached to said elastic means (22) and said cap (T) supporting said fastening means (S).

14. Assembly comprising:
- a fishing rod (C),
- a fishing line (L) connected to said fishing rod (C); and
- a device (1) according to any one of the preceding claims connected to the fishing line (L).

## Patentansprüche

1. Vorrichtung (1), die dazu geeignet ist, an einer Angelschnur einer Angelrute befestigt zu werden, um ein automatisches Anbeißen eines Fisches zu erhalten; wobei die Vorrichtung (1) umfasst:
- ein rohrförmiges Gehäuse (10), umfassend eine axiale Leitung, ein hinteres Ende (10a), ein vorderes Ende (10b) und eine vordere Aussparung (14) am vorderen Ende (10b);
- ein Betätigungselement (20), umfassend ein elastisches Element (22), das am hinteren Ende (10a) des rohrförmigen Gehäuses (10) angeordnet ist; wobei das elastische Element (22) dazu geeignet ist, in einer ausgezogenen Position und einer zurückgezogenen Position angeordnet zu werden;
- mindestens einen Anker (24; 24', 240), der mit dem elastischen Element (22) verbunden ist,
- Anschlagmittel (P2), die in dem Gehäuse (10) angeordnet sind und dazu geeignet sind, den Anker (24; 24', 240) in einer vorderen Endlagenposition zu stoppen, wenn das elastische Element (22) sich in ausgezogener Position befindet;
- einen Faden (23), der durch die vordere Aussparung (14) hindurchgeht und mit einem Haken (A) und dem Anker ( (24; 24', 240) so verbunden ist, dass der Anker (24; 24', 240) infolge eines auf den Faden (23) ausgeübten Zuges durch den Fisch, der am Haken angebissen hat, sich von den Anschlagmitteln (P2) lösen kann;
wobei
der Faden (23) dauerhaft am Anker (24; 24', 240) befestigt ist; und
die Vorrichtung (1) Folgendes umfasst:
- Befestigungsmittel (S), die am hinteren Ende (10a) des Gehäuses angeordnet sind, um das Gehäuse (10) an einem Ende einer Angelschnur (L) einer Angelrute zu befestigen, so dass die Vorrichtung (1) während des Gebrauchs untergetaucht ist; und
- wasserlösliche Arretiermittel (Q1, Q2), die in die axiale Leitung des Gehäuses (10) eingesteckt sind und auf den Faden (23) und/oder den Anker (24; 24', 240) wirken, um zu verhindern, dass der Anker sich von den Anschlagmitteln (P2) löst.

2. Vorrichtung (1) nach Anspruch 1, wobei der Faden (23) eine Länge von 50 cm oder weniger aufweist.

3. Vorrichtung (1) nach Anspruch 1 oder 2, wobei die Befestigungsmittel (S) einen quer verlaufenden zylindrischen Stift (S1) umfassen, der in Quergewindelöcher (21a') von Flügeln (21a") eingedreht ist, die einstückig mit dem Gehäuse (10) sind und an dem hinteren Ende (10a) des Gehäuses angeordnet sind; wobei der Stift dazu geeignet ist, eine Befestigung für das Ende der Angelschnur (L) zu bilden.

4. Vorrichtung (1) nach einem der vorstehenden Ansprüche, wobei:
- die Vorrichtung (1) einen hinteren Anker (24; 24') umfasst, an dem der Faden (23) befestigt ist; wobei der hintere Anker (24; 24') zwei zylindrische Arme (26) umfasst, die miteinander gefluchtet sind;
- das Gehäuse (10) zwei symmetrisch gegenüberliegende Längsschlitze (15) umfasst, in die Enden der zylindrischen Arme (26) des hinteren Ankers (24) verschiebbar eingesetzt sind;
- wobei die Anschlagmittel (P2) ein oder mehrere Paare gegenüberliegender Nuten (15a) umfassen, die an den unteren Rändern (153) der Längsschlitze (15) bereitgestellt sind und dazu geeignet sind, die Enden der zylindrischen Arme des hinteren Ankers (24, 24') aufzunehmen.

5. Vorrichtung (1) nach Anspruch 4, wobei der hintere Anker (24') kreuzförmig ist und einen Längskörper (27) umfasst und die beiden zylindrischen Arme (26) in entgegengesetzten Richtungen aus dem Längskörper (27) vorstehen; wobei der Längskörper (27) einen hinteren Abschnitt (271) umfasst, an dem das elastische Element (22) befestigt ist, und einen vorderen Abschnitt (272), der einen Haken (28) zur Befestigung des Fadens (23) umfasst.

6. Vorrichtung (1) nach Anspruch 4, wobei der hintere Anker (24) die Form eines zylindrischen Stifts aufweist, umfassend ein Mittelloch, in das der Faden (23) eingeführt ist und in Bezug auf welches die beiden zylindrischen Arme (26) auf dem hinteren Anker (24) identifiziert werden.

7. Vorrichtung (1) nach Anspruch 6, umfassend ein rohrförmiges Distanzstück (25), das um den Faden (23) herum zwischen dem elastischen Element (22) und dem hinteren Anker (24) angeordnet ist; wobei der hintere Anker (24) einen Stutzen (24a) aufweist, der plastisch verformbar in dem Loch des hinteren Ankers (24) angeordnet ist, um den Faden (23) an dem hinteren Anker (24) zu befestigen.

8. Vorrichtung (1) nach einem der vorstehenden Ansprüche, wobei auf einer oberen Wand (10e) des Gehäuses (10) ein Fenster (17) zum Einsetzen der wasserlöslichen Arretiermittel (Q1) bereitgestellt ist.

9. Vorrichtung (1) nach einem der Ansprüche 4 bis 8, wobei das Gehäuse (10) Einschnitte (15b) in Form eines umgekehrten U umfasst, die am oberen Rand der Schlitze (15) so angeordnet sind, dass die stiftförmigen wasserlöslichen Arretiermittel (Q2) quer einsetzbar sind.

10. Vorrichtung (1) nach einem der vorstehenden Ansprüche, umfassend einen vorderen Anker (240), der aus einer Bleikugel, die auf den Faden (23) aufgefädelt und daran befestigt ist, wobei die Anschlagmittel (P2) eine im Wesentlichen I-förmige Rille (241) umfassen, die am vorderen Ende (10b) des Gehäuses (10) herausgearbeitet ist.

11. Vorrichtung (1) nach einem der vorstehenden Ansprüche, wobei das Gehäuse (10) eine Bodenwand (10c) mit Aussparungsmitteln (18) umfasst, die dazu geeignet sind, die Befestigung von Blei (18a) oder Schwimmern (18b) zu erlauben.

12. Vorrichtung (1) nach einem der vorstehenden Ansprüche, umfassend eine Haube (30), die dazu geeignet ist, das Gehäuse (10) aufzunehmen.

13. Vorrichtung (1) nach einem der vorstehenden Ansprüche, wobei das Betätigungselement (20) einen Deckel (T) umfasst, der an dem hinteren Ende (10a) des Gehäuses befestigt ist; wobei der Deckel mit den elastischen Mitteln (22) verbunden ist und der Deckel (T) die Befestigungsmittel (S) trägt.

14. Gruppe, umfassend:
- eine Angelrute (C),
- eine Angelschnur (L), die mit der Angelrute (C) verbunden ist; und
- eine Vorrichtung (1) nach einem der vorstehenden Ansprüche, die mit der Angelschnur (L) verbunden ist.

## Revendications

1. Dispositif (1) pour cannes à pêche afin d'obtenir le ferrage automatique du poisson ; ledit dispositif (1) comprenant :
- un boitier (10) de forme tubulaire comprenant un conduit axial, une extrémité postérieure (10a), une extrémité antérieure (10b) et une entaille antérieure (14), en correspondance de l'extrémité antérieure (10b) ;
- un actionneur (20) comprenant un élément élastique (22) disposé en correspondance de l'extrémité postérieure (10a) du susdit boitier tubulaire (10) ; où ledit élément élastique (22) est apte à assumer une position déployée et une position rétractée ;
- au moins une ancre (24; 24', 240) reliée à l'élément élastique (22),
- des moyens d'arrêt (P2) disposés dans le susdit boitier (10), aptes à arrêter la susdite ancre (24; 24', 240) sur une position de fin de course antérieure lorsque l'élément élastique (22) se trouve en position déployée ;
- un fil (23) qui traverse l'entaille antérieure (14) et qui est relié à un hameçon (A) et à la susdite ancre (24, 24', 240), de manière que, suite à la traction exercée sur le fil (23) par le poisson pris à l'hameçon, la susdite ancre (24; 24', 240) puisse se désaccoupler des susdits moyens d'arrêt (P2) ;
où
le susdit fil (23) est fixé de manière permanente à l'ancre (24; 24', 240) ; et
ledit dispositif (1) comprend :
- des moyens d'accrochage (S) disposés à hauteur de l'extrémité postérieure (10a) du boitier pour l'accrochage du boitier (10) à une extrémité d'une ligne de pêche (L) d'une canne à pêche, afin que le dispositif (1) soit submergé pendant l'usage ; et
- des moyens de blocage hydrosolubles (Q1, Q2) qui peuvent être insérés dans le susdit conduit axial du boitier (10) et qui agissent sur le fil (23) et/ou sur l'ancre (24; 24' 240) pour empêcher à l'ancre de se désaccoupler des moyens d'arrêt (P2).

2. Dispositif (1) selon la revendication 1, où le susdit fil (23) a une longueur égale ou inférieure à 50 cm.

3. Dispositif (1) selon la revendication 1 ou 2, où lesdits moyens d'accrochage (S) comprennent une broche transversale (S1) de forme cylindrique enfilée transversalement dans des orifices (21a') de boucles (21a") solidaires au boitier (10) et disposées sur l'extrémité postérieure (10a) du boitier ; ladite broche étant apte à constituer un accrochage pour l'extrémité de la ligne de pêche (L).

4. Dispositif (1) selon l'une quelconque des revendications précédentes, où :
- ledit dispositif (1) comprend une ancre postérieure (24; 24') à laquelle le susdit fil (23) est relié ; ladite ancre postérieure (24, 24') comprend deux bras cylindriques (26) alignés entre eux ;
- ledit boitier (10) comprend deux fentes longitudinales (15) opposées et symétriques dans lesquelles sont enfilées coulissantes les extrémités des bras cylindriques (26) de l'ancre postérieure (24) ;
- lesdits moyens d'arrêt (P2) comprennent une ou plusieurs paires opposées de rainures (15a) prévues en correspondance de bords inférieurs (153) des fentes longitudinales (15) aptes à contenir les extrémités des bras cylindriques de l'ancre postérieure (24, 24').

5. Dispositif (1) selon la revendication 4, où ladite ancre postérieure (24') a la forme d'une croix comprenant un corps longitudinal (27) et les susdits deux bras cylindriques (26) qui débordent en directions opposées du corps longitudinal (27); ledit corps longitudinal (27) comprend un segment postérieur (271) sur lequel est fixé l'élément élastique (22) et un segment antérieur (272) comprenant un crochet (28) pour l'accrochage du fil (23).

6. Dispositif (1) selon la revendication 4, où ladite ancre postérieure (24) a la forme d'une fiche cylindrique comprenant un orifice central dans lequel le fil (23) est enfilé, et par rapport auquel on identifie sur l'ancre postérieure (24) les susdits deux bras cylindriques (26).

7. Dispositif (1) selon la revendication 6, comprenant une entretoise (25) de forme tubulaire disposée autour du fil (23), entre le susdit élément élastique (22) et l'ancre postérieure (24) ; où l'ancre postérieure (24) a un embout (24a) plastiquement déformable disposé dans l'orifice de l'ancre postérieure (24) pour fixer le fil (23) à l'ancre postérieure (24).

8. Dispositif (1) selon l'une quelconque des revendications précédentes, où sur une paroi supérieure (10e) du boitier (10), une ouverture (17) est réalisée pour l'introduction des moyens de blocage hydrosolubles (Q1).

9. Dispositif (1) selon l'une quelconque des revendications de 4 à 8, où ledit boitier (10) comprend des entailles en forme de « U » renversé (15b) disposées sur le bord supérieur des fentes (15) pour une introduction transversale des susdits moyens de blocage hydrosolubles (Q2) ayant la forme d'une fiche.

10. Dispositif (1) selon l'une quelconque des revendications précédentes, comprenant une ancre antérieure (240) qui consiste en un plomb sphérique enfilé et fixé sur le susdit fil (23), où lesdits moyens d'arrêt (P2) comprennent une rainure (241) pratiquement en forme de « I », réalisée dans l'extrémité antérieure (10b) du boitier (10).

11. Dispositif (1) selon l'une quelconque des revendications précédentes, où ledit boitier (10) comprend une paroi inférieure (10c) ayant des moyens à encoche (18) aptes à l'accrochage de plombs (18a) ou de flotteurs (18b).

12. Dispositif (1) selon l'une quelconque des revendications précédentes, comprenant un couvercle (30) apte à contenir le boitier (10).

13. Dispositif (1) selon l'une quelconque des revendications précédentes, où le susdit actionneur (20) comprend un bouchon (T) fixé à l'extrémité postérieure (10a) du boitier ; ledit bouchon étant relié aux susdits moyens élastiques (22) et ledit bouchon (T) soutenant les susdits moyens d'accrochage (S).

14. Ensemble comprenant :
- une canne (C),
- une ligne de pêche (L) reliée à ladite canne (C) ; et
- un dispositif (1) selon l'une quelconque des revendications précédentes relié à la ligne de pêche (L).
